# FASCICULE DE BREVET EUROPEEN

(11) **EP 2 162 301 B1**
(45) Date de publication et mention de la délivrance du brevet: **13.07.2011**
(21) Numéro de dépôt: 08759550.0
(22) Date de dépôt: 13.05.2008
(51) Int. Cl.: B60C 9/22

(54) **PNEUMATIQUE POUR VEHICULES LOURDS**
REIFEN FÜR LASTKRAFTWAGEN
TYRE FOR HEAVY-GOODS VEHICLES

(30) Priorité: 14.05.2007 FR 0703507
(43) Date de publication de la demande: 17.03.2010
(73) Titulaire: Société de Technologie Michelin, 63000 Clermont-Ferrand (FR); Michelin Recherche et Technique S.A., 1763 Granges-Paccot (CH)
(72) Inventeur: DOMINGO, Alain, F-63190 Orleat (FR); JOHNSON, Philippe, F-63800 Perignat Sur Allier (FR)
(74) Mandataire: Le Cam, Stéphane Georges Elie
(86) Numéro de dépôt international: PCT/EP2008/055849
(87) Numéro de publication internationale: WO 2008/141979

(56) Documents cités:
- EP-A- 1 122 098
- WO-A-00/69659
- WO-A-99/24269
- FR-A- 2 222 232
- FR-A- 2 728 510
- FR-A- 2 857 619

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

L'armature de renforcement ou renforcement des pneumatiques et notamment des pneumatiques de véhicules de type poids-lourds est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisé pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc., sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle/peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieure à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

On entend par « module d'élasticité » d'un mélange caoutchouteux, un module sécant d'extension à 10 % de déformation et à température ambiante.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

En ce qui concerne les fils ou câbles métalliques, les mesures de force à la rupture (charge maximale en N), de résistance à la rupture (en MPa) et d'allongement à la rupture (allongement total en %) sont effectuées en traction selon la norme ISO 6892 de 1984.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Le même problème existe dans le cas de bords de deux couches d'éléments de renforcement, ladite autre couche n'étant pas obligatoirement radialement adjacente à la première.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

Les roulages prolongés dans des conditions particulièrement sévères des pneumatiques ainsi construits ont fait apparaître des limites en termes d'endurance de ces pneumatiques.

Pour remédier à de tels inconvénients et améliorer l'endurance de l'armature de sommet de ces pneumatiques, il a été proposé d'associer aux couches de sommet de travail à angle au moins une couche additionnelle d'éléments de renforcement sensiblement parallèles à la direction circonférentielle. La demande française WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

La couche d'éléments de renforcement circonférentielles est usuellement constituées par au moins un câble métallique enroulé pour former une spire dont l'angle de pose par rapport à la direction circonférentielle est inférieur à 8°. Les câbles initialement fabriqués sont enduits d'un mélange caoutchouteux avant d'être mis en place. Ce mélange caoutchouteux vient ensuite pénétrer le câble sous l'effet de la pression et de la température lors de la cuisson du pneumatique. L'enrobage des câbles par le mélange caoutchouteux peut être réalisé dans une phase intermédiaire entre la fabrication du câble et sa mise en place pour être stocké sous forme de bobine. Une variante de fabrication consiste à réaliser l'enrobage des câbles par le mélange caoutchouteux simultanément ou plus exactement juste avant la mise en place desdits câbles.

Les résultats obtenus en termes d'endurance et d'usure lors de roulages prolongés sur routes à grande vitesse sont satisfaisants. Toutefois, il apparaît que les mêmes véhicules sont amenés à emprunter des routes ou des pistes non bitumés, par exemple pour arriver jusqu'à un chantier ou rejoindre une zone de déchargement. Les roulages sur ces zones se font à faibles vitesses par contre les pneumatiques, notamment leurs bandes de roulements, sont soumis à des agressions du fait par exemple de la présence de cailloux qui pénalisent lourdement les performances en termes d'usure des pneumatiques.

Un but de l'invention est de fournir des pneumatiques pour véhicules "Poids-Lourds", dont les performances d'endurance et d'usure sont conservées pour des usages routiers et dont les performances d'usure sont améliorées pour des usages sur sol non bitumé.

Ce but est atteint selon l'invention par un pneumatique à armature de carcasse radiale comprenant une armature de sommet formée d'au moins deux couches de sommet de travail d'éléments de renforcement inextensibles, croisés d'une couche à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, l'armature de sommet comportant au moins une couche d'éléments de renforcement circonférentiels, la couche d'éléments de renforcement circonférentiels étant constituée d'au moins une partie centrale et deux parties axialement extérieures, et le taux de pénétration des éléments de renforcement circonférentiels de la partie centrale par le mélange caoutchouteux les enrobant étant inférieur au taux de pénétration des éléments de renforcement circonférentiels des parties axialement extérieures par le mélange caoutchouteux les enrobant.

Le taux de pénétration d'éléments de renforcement par un mélange caoutchouteux selon l'invention se traduit par le taux de pénétration d'un mélange caoutchouteux dans les zones libres d'un câble, c'est-à-dire les zones ne comportant pas de matière ; il est exprimé en pourcentage desdites zones libres occupées par un mélange caoutchouteux après cuisson et déterminée par un test de perméabilité à l'air.

Ce test de perméabilité à l'air permet de mesurer un indice relatif de perméabilité à l'air. Il constitue un moyen simple de mesure indirecte du taux de pénétration du câble par un mélange caoutchouteux. Il est réalisé sur des câbles extraits directement, par décorticage, des nappes de caoutchouc vulcanisées qu'ils renforcent, donc pénétrés par le mélange caoutchouteux cuit.

Le test est réalisé sur une longueur de câble déterminée (par exemple 2 cm) de la manière suivante : on envoie de l'air à l'entrée du câble, sous une pression donnée (par exemple 1 bar), et on mesure la quantité d'air à la sortie, à l'aide d'un débitmètre ; pendant la mesure l'échantillon de câble est bloqué dans un joint étanche de telle manière que seule la quantité d'air traversant le câble d'une extrémité à l'autre, selon son axe longitudinal, est prise en compte par la mesure. Le débit mesuré est d'autant plus faible que le taux de pénétration du câble par le mélange caoutchouteux est élevé.

Selon un mode de réalisation préféré de l'invention, le taux de pénétration des éléments de renforcement circonférentiels de la partie centrale par le mélange caoutchouteux les enrobant est inférieur d'au moins 30% au taux de pénétration des éléments de renforcement circonférentiels des parties axialement extérieures par le mélange caoutchouteux les enrobant.

De préférence, le taux de pénétration des éléments de renforcement circonférentiels des parties axialement extérieures par le mélange caoutchouteux les enrobant est supérieur à 90 % .

De préférence encore, le taux de pénétration des éléments de renforcement circonférentiels de la partie centrale par le mélange caoutchouteux les enrobant est inférieur à 60 %.

Pour la réalisation d'une telle couche d'éléments de renforcement circonférentiels, il est possible d'utiliser des câbles différents initialement enrobés ou bien des câbles enrobés lors de leur mise en place. Selon cette dernière variante de réalisation, il peut s'agir d'un seul câble dont on fait varier le mélange caoutchouteux d'enrobage ou bien d'un changement complet du dispositif de pose des câbles conduisant à la pose de différents câbles comportant des mélanges caoutchouteux d'enrobage différents.

Pour obtenir des pénétrations différentes du mélange caoutchouteux dans les différentes parties de la couche d'éléments de renforcement circonférentiels, les inventeurs proposent par exemple de limiter la pénétration d'un mélange caoutchouteux donné en provoquant une vulcanisation ou tout au moins un début de vulcanisation du mélange caoutchouteux avant la mise en place de l'élément de renforcement. Cette vulcanisation ou début de vulcanisation peut être obtenue en élevant rapidement la température du mélange caoutchouteux pendant un temps court. Cette étape d'élévation de la température est par exemple réalisée immédiatement après enrobage du câble par le mélange caoutchouteux. Lorsqu'un câble enrobé a subi un tel traitement la pénétration du mélange caoutchouteux au sein du câble lors de la cuisson du pneumatique est fortement limitée voire inexistante.

Le pneumatique ainsi défini selon l'invention conserve des propriétés satisfaisantes en roulage à grandes vitesses sur routes et présente en outre des performances en termes de résistance à l'usure et plus précisément en termes de résistances aux agressions nettement améliorés par rapport à des pneumatiques connus.

Les inventeurs ont en effet su mettre en évidence que les agressions qui interviennent sur des terrains non bituminés concernent essentiellement la partie centrale de la bande de roulement du pneumatique, celle-ci étant semble-t-il toujours la plus exposée.

Le pneumatique tel que défini selon l'invention conduit à un assouplissement selon la direction radiale de la partie axialement centrale du pneumatique du fait notamment de la moindre rigidité des éléments de renforcements circonférentiels de cette zone centrale du pneumatique liée à la pénétration des mélanges caoutchouteux enrobant les éléments de renforcement circonférentiels dans les différentes parties axiales. Cet assouplissement conduit, au vu des résultats obtenus, à une absorption des agressions de la bande de roulement de la part des obstacles tels que des cailloux présent sur les sols sur lesquels circulent le véhicule.

La rigidité des éléments de renforcement de la partie centrale reste suffisante afin d'assurer un frettage satisfaisant du pneumatique au niveau de cette partie centrale pour supporter les contraintes imposées notamment lors du gonflage ou des roulages à grandes vitesses et limiter l'expansion circonférentielle de l'armature de sommet.

Selon un mode de réalisation avantageux de l'invention, le module d'élasticité du mélange caoutchouteux enrobant les éléments de renforcement circonférentiels de la partie centrale est inférieur au module du mélange caoutchouteux enrobant les éléments de renforcement circonférentiels des parties axialement extérieures.

Cette variante de réalisation de l'invention combine des modules d'élasticité des mélanges caoutchouteux enrobant les éléments de renforcement circonférentiels à des pénétrations différentes des mélanges caoutchouteux enrobant les éléments de renforcement circonférentiels dans les différentes parties axiales. Le module inférieur du mélange caoutchouteux enrobant les éléments de renforcement circonférentiels de la partie centrale associé à une pénétration inférieure dudit mélange caoutchouteux accentue encore la moindre rigidité des éléments de renforcements circonférentiels de la partie centrale par rapport à celle des éléments de renforcement circonférentiels des parties axialement extérieures.

Selon une variante avantageuse de réalisation de l'invention, la couche d'éléments de renforcement circonférentiels présente une largeur axiale supérieure à 0.5xS.

S est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon une variante de réalisation préférée de l'invention, la largeur axiale de la partie centrale de la couche d'éléments de renforcement circonférentiels est supérieure à 0.15xS et inférieur à 0.5xS.

Avantageusement encore selon l'invention, la largeur axiale de chacune des parties axialement extérieures de la couche d'éléments de renforcement circonférentiels est inférieure à 0.45xS.

L'invention prévoit encore avantageusement qu'au moins une couche constituant l'architecture sommet est présente radialement sous le « rib », ou sculpture d'orientation principale longitudinale, axialement le plus à l'extérieur. Cette réalisation permet comme énoncé précédemment de renforcer la rigidité de ladite sculpture. Avantageusement encore, la couche d'éléments de renforcement circonférentiels est présente radialement sous le « rib », ou sculpture d'orientation principale longitudinale, axialement le plus à l'extérieur.

Selon une réalisation préférée de l'invention, au moins deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

De préférence encore, la couche de sommet de travail axialement la plus large est radialement à l'intérieur des autres couches de sommet de travail.

Selon un mode de réalisation préférée de l'invention, la couche d'éléments de renforcement circonférentiels est radialement disposée entre deux couches de sommet de travail.

Avantageusement encore selon l'invention, les largeurs axiales des couches de sommet de travail radialement adjacentes à la couche d'éléments de renforcement circonférentiels sont supérieures à la largeur axiale de ladite couche d'éléments de renforcement circonférentiels et de préférence, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par des profilés de mélange de caoutchouc au moins sur le restant de la largeur commune aux dites deux couches de travail.

Au sens de l'invention des couches couplées sont des couches dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

La présence de tels couplages entre les couches de sommet de travail adjacentes à la couche d'éléments de renforcement circonférentiels permettent la diminution des contraintes de tension agissant sur les éléments circonférentiels axialement le plus à l'extérieur et situé le plus près du couplage.

L'épaisseur des profilés de découplage entre nappes de travail, mesurée au droit des extrémités de la nappe de travail la moins large, sera au moins égale à deux millimètres, et préférentiellement supérieure à 2,5 mm.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible

Les éléments métalliques sont préférentiellement des câbles d'acier.

L'invention prévoit encore avantageusement pour diminuer les contraintes de tension agissant sur les éléments circonférentiels axialement le plus à l'extérieur que l'angle formé avec la direction circonférentielle par les éléments de renforcement des couches de sommet de travail est inférieur à 30° et de préférence inférieur à 25°.

Selon une autre variante avantageuse de l'invention, les couches de sommet de travail comportent des éléments de renforcement, croisés d'une nappe à l'autre, faisant avec la direction circonférentielle des angles variables selon la direction axiale, lesdits angles étant supérieurs sur les bords axialement extérieurs des couches d'éléments de renforcement par rapport aux angles desdits éléments mesurés au niveau du plan médian circonférentiel. Une telle réalisation de l'invention permet d'augmenter la rigidité circonférentielle dans certaines zones et au contraire de la diminuer dans d'autres, notamment pour diminuer les mises en compression de l'armature de carcasse.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention en référence aux figures 1 à 4 qui représentent :
- figure1, une vue méridienne d'un schéma d'un pneumatique selon un mode de réalisation de l'invention,
- figure 2, un diagramme illustrant des courbes de forces de traction en fonction de l'allongement de différents câbles,
- figure 3, une vue méridienne d'un schéma d'un pneumatique selon un deuxième mode de réalisation de l'invention,
- figure 4, une vue méridienne d'un schéma d'un pneumatique selon un troisième mode de réalisation de l'invention.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

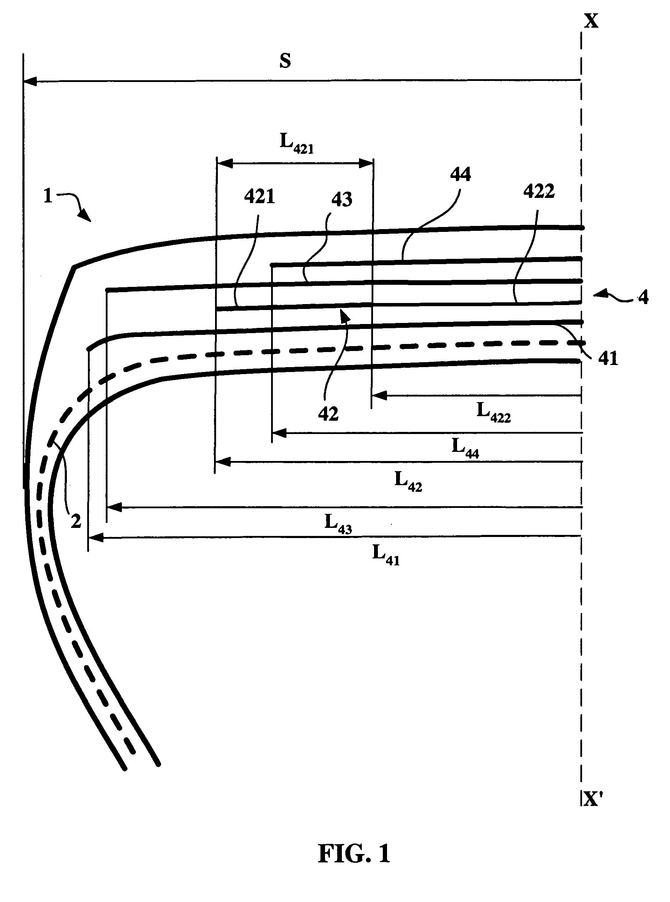

Sur la figure 1, le pneumatique 1, de dimension 315/60 R 22.5, a un rapport de forme H/S égal à 0,60, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à l'extérieur :
- d'une première couche de travail 41 formée de câbles métalliques inextensibles 11.35 non frettés, continus sur toute la largeur de la nappe, orientés d'un angle égal à 18°,
- d'une couche d'éléments de renforcement circonférentiels 42 formée de câbles métalliques en acier 21x28, de type "bi-module", constituée de trois parties dont deux parties axialement extérieures 421 et une partie centrale 422,
- d'une seconde couche de travail 43 formée de câbles métalliques inextensibles 11.35 non frettés, continus sur toute la largeur de la nappe, orientés d'un angle égal à 26° et croisés aux câbles métalliques de la couche 41,
- d'une couche de protection 44 formées de câbles métalliques élastiques 18x23.

L'armature de sommet est elle-même coiffée d'une bande de roulement 6.

La largeur axiale maximale S du pneumatique est égale à 319 mm.

La largeur axiale L₄₁ de la première couche de travail 41 est égale à 260 mm.

La largeur axiale L₄₃ de la deuxième couche de travail 43 est égale à 245 mm. La différence entre les largeurs L₄₁ et L₄₃ est égale à 15 mm.

Quant à la largeur axiale globale L₄₂ de la couche d'éléments de renforcement circonférentiels 42, elle est égale à 200 mm. Chacune des parties axialement extérieures 421 présentant une largeur axiale L₄₂₁ égale à 50 mm et donc inférieure à 45% de S.

La largeur de la partie centrale L₄₂₂ est égale à 100 mm.

La dernière nappe de sommet 44, dite de protection, a une largeur L₄₄ égale à 180 mm.

Le mélange caoutchouteux enrobant les câbles métalliques en acier 21x28 de la couche 42 présente un module égal à 10 MPa. Le mélange caoutchouteux est le même dans la partie centrale 422 et dans les parties axialement extérieures 421.

Le taux de pénétration des éléments de renforcement de la partie centrale 422 est égal à 30 %.

Le taux de pénétration des éléments de renforcement des parties axialement extérieures 421 est égal à 95 %.

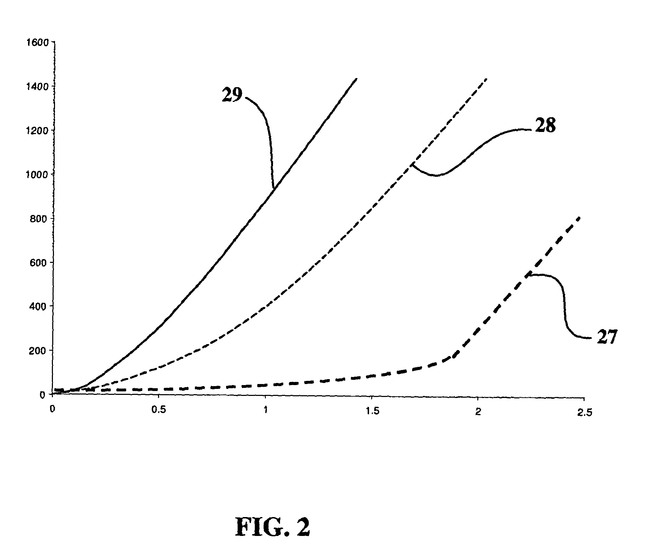

La figure 2 illustre des courbes présentant en ordonnée la force de traction, exprimée en Newton, et en abscisse l'allongement, exprimé en millimètre, pour le câble 21x28, de la couche d'éléments de renforcement circonférentiels 42, nu et enrobé des différents mélanges.

Les mesures pour les câbles enrobés de mélange sont faites sur des câbles extraits du pneumatique et donc après cuisson de celui-ci, les mélanges ayant alors pénétrés les câbles.

La courbe 27 représente la courbe de la force de traction en fonction de l'allongement pour le câble 21x28 nu. La courbe 28 représente la courbe de la force de traction en fonction de l'allongement pour le câble 21x28 enrobé d'un mélange caoutchouteux et extrait de la partie centrale 422 de la couche d'éléments de renforcement circonférentiels 42. La courbe 29 représente la courbe de la force de traction en fonction de l'allongement pour le câble 21x28 enrobé d'un mélange caoutchouteux et extrait de l'une des parties axialement extérieures 421 de la couche d'éléments de renforcement circonférentiels 42.

Ces courbes montrent que la présence du mélange caoutchouteux enrobant le câble métallique contribue à augmenter la rigidité du câble, d'une part l'allongement structural du câble étant réduit et d'autre part, le module tangent maximum augmentant. En outre, ces courbes montrent également que la réduction de l'allongement structural et l'augmentation du module tangent maximum d'un câble donné augmentent avec le taux de pénétration du mélange caoutchouteux d'enrobage dudit câble.

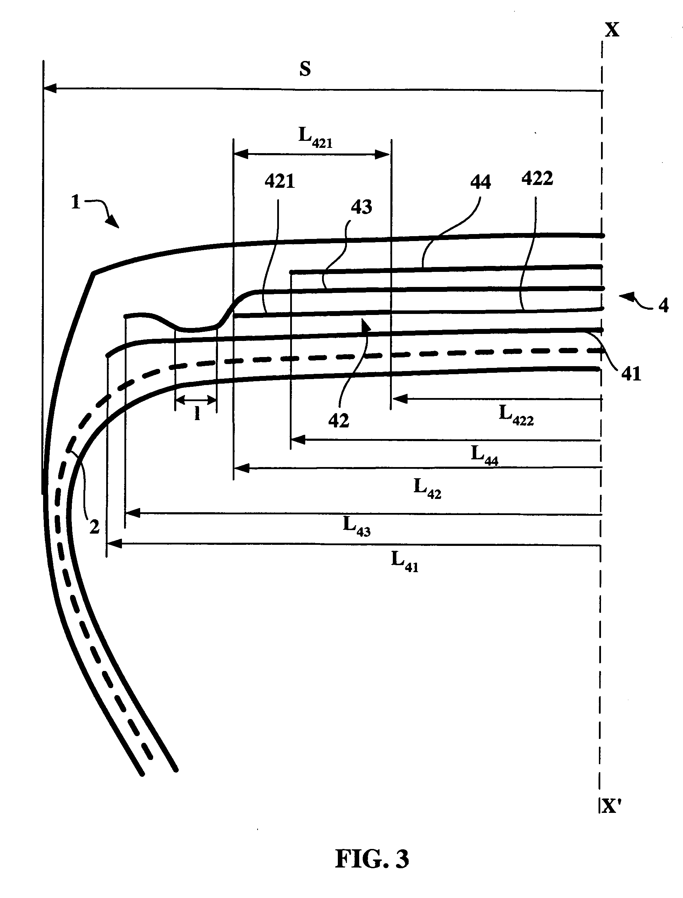

Sur la figure 3, le pneumatique 1 diffère de celui représenté sur la figure 1 en ce que les deux couches de travail 41 et 43 sont, de chaque côté du plan équatorial et axialement dans le prolongement de la couche d'éléments de renforcement circonférentiels 42, couplées sur une largeur axiale 1 : les câbles de la première couche de travail 41 et les câbles de la deuxième couche de travail 43, sur la largeur axiale de couplage 1 des deux couches, sont séparés radialement entre eux par une couche de gomme, dont l'épaisseur est minimale et correspond au double de l'épaisseur de la couche caoutchouteuse de calandrage des câbles métalliques 11.35 non frettés dont est formée chaque couche de travail 41, 43, soit 0,8 mm. Sur la largeur restante commune aux deux couches de travail, les deux couches de travail 41, 43 sont séparés par un profilé de caoutchouc, non représenté sur la figure, l'épaisseur dudit profilé étant croissante en allant de l'extrémité axiale de la zone de couplage à l'extrémité de la couche de travail la moins large. Ledit profilé a avantageusement une largeur suffisante pour recouvrir radialement l'extrémité de la couche de travail 41 la plus large, qui est, dans ce cas la couche de travail radialement la plus proche de l'armature de carcasse.

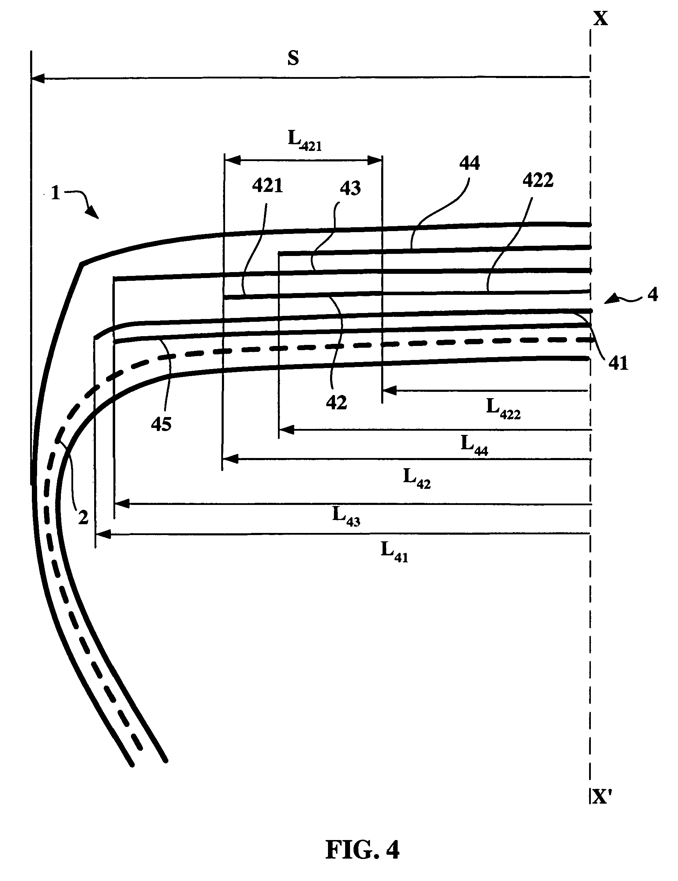

Sur la figure 4, le pneumatique 1 diffère de celui représenté sur la figure 1 en ce qu'il comporte une couche d'éléments de renforcement complémentaire 45, dite de triangulation, de largeur sensiblement égale à celle de la couche de travail 43. Les éléments de renforcement de cette couche 45 forment un angle d'environ 60° avec la direction circonférentielle et sont orientés dans le même sens que les éléments de renforcement de la couche de travail 41. Cette couche 45 permet notamment de contribuer à la reprise des efforts de compression transversale dont est l'objet l'ensemble des éléments de renforcement dans la zone du sommet du pneumatique.

Des essais ont été réalisés avec le pneumatique réalisé selon l'invention conformément à la représentation de la figure 1 et comparés avec un pneumatique de référence identique mais réalisé selon une configuration usuelle.

Ce pneumatique de référence comporte une couche d'éléments de renforcements circonférentiels constituée d'un même câble enrobé d'un mélange caoutchouteux dont le taux de pénétration est le même sur toute sa longueur.

Des premiers essais d'endurance ont été réalisés en équipant des véhicules identiques avec chacun des pneumatiques et en faisant suivre des parcours en ligne droite à chacun des véhicules, les pneumatiques étant soumis à des charges supérieures à la charge nominale pour accélérer ce type de test.

Les véhicules sont associés à une charge par pneumatique de 4000 Kg.

D'autres essais d'endurance ont été réalisés sur une machine de tests imposant une charge aux pneumatiques et un angle de dérive. Les essais ont été réalisés pour les pneumatiques selon l'invention avec une charge et un angle de dérive identiques à ceux appliqués aux pneumatiques de référence.

Les essais ainsi réalisés ont montré que les distances parcourues lors de chacun de ces tests sont sensiblement identiques pour les pneumatiques selon l'invention et les pneumatiques de référence. Il apparaît donc que les pneumatiques selon l'invention présentent des performances sensiblement équivalentes en termes d'endurance que les pneumatiques de référence.

Enfin d'autres essais de roulage ont été effectués sur des sols non bitumés présentant des reliefs simulant la présence de cailloux particulièrement agressifs pour les bandes de roulement des pneumatiques.

Ces derniers essais ont montré qu'après des distances parcourues identiques les pneumatiques selon l'invention présentent des altérations moins sévères que celles des pneumatiques de référence qui sont jugées rédhibitoires quant à l'utilisation ultérieure des pneumatiques de référence.

L'invention telle qu'elle vient d'être décrite notamment en référence aux exemples de réalisation ne doit pas être comprise comme étant limitée à ces exemples. Bien que restant dans le champ d'application de l'invention, la couche d'éléments de renforcement circonférentiels peut par exemple être constituée de plus de trois parties pour présenter une variation graduelle du taux de pénétration du mélange caoutchouteux dans le câble et donc une variation graduelle des modules d'élasticités des éléments de renforcement circonférentiels depuis le sommet du pneumatiques vers les extrémités axialement extérieures de la couche d'éléments de renforcement circonférentiels.

## Revendications

1. - Pneumatique à armature de carcasse radiale comprenant une armature de sommet formée d'au moins deux couches de sommet de travail d'éléments de renforcement inextensibles, croisés d'une couche à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, l'armature de sommet comportant au moins une couche d'éléments de renforcement circonférentiels **caractérisé en ce que** la couche d'éléments de renforcement circonférentiels est constituée d'au moins une partie centrale et deux parties axialement extérieures, et **en ce que** le taux de pénétration des éléments de renforcement circonférentiels de la partie centrale par le mélange caoutchouteux les enrobant est inférieur au taux de pénétration des éléments de renforcement circonférentiels des parties axialement extérieures par le mélange caoutchouteux les enrobant.

2. - Pneumatique selon la revendication 1, **caractérisé en ce que** le taux de pénétration des éléments de renforcement circonférentiels de la partie centrale par le mélange caoutchouteux les enrobant est inférieur d'au moins 30% au taux de pénétration des éléments de renforcement circonférentiels des parties axialement extérieures par le mélange caoutchouteux les enrobant.

3. - Pneumatique selon la revendication 1 ou 2, **caractérisé en ce que** le taux de pénétration des éléments de renforcement circonférentiels des parties axialement extérieures par le mélange caoutchouteux les enrobant est supérieur à 90 %.

4. - Pneumatique selon l'une des revendications 1 à 3, **caractérisé en ce que** le taux de pénétration des éléments de renforcement circonférentiels de la partie centrale par le mélange caoutchouteux les enrobant est inférieur à 60 %.

5. - Pneumatique selon l'une des revendications 1 à 4, **caractérisé en ce que** le module d'élasticité du mélange caoutchouteux enrobant les éléments de renforcement circonférentiels de la partie centrale est inférieur au module du mélange caoutchouteux enrobant les éléments de renforcement circonférentiels des parties axialement extérieures.

6. - Pneumatique selon l'une des revendications précédentes, **caractérisé en ce que** la largeur axiale de la partie centrale de la couche d'éléments de renforcement circonférentiels est supérieure à 0.15xS et inférieur à 0.5xS, S étant la largeur maximale axiale du
pneumatique, lorsque ce dernier est monté sur sa jante de service et gonflé à sa pression recommandée.

7. - Pneumatique selon l'une des revendications précédentes, **caractérisé en ce que** la largeur axiale de chacune des parties axialement extérieures de la couche d'éléments de renforcement circonférentiels est inférieure à 0.45xS.

8. - Pneumatique selon l'une des revendications précédentes, **caractérisé en ce que** la couche d'éléments de renforcement circonférentiels est radialement disposée entre deux couches de sommet de travail.

9. - Pneumatique selon l'une des revendications précédentes, au moins deux couches de sommet de travail présentant des largeurs axiales différentes, **caractérisé en ce que** la différence entre la largeur axiale de la couche de sommet de travail axialement la plus large et la largeur axiale de la couche de sommet de travail axialement la moins large est comprise entre 10 et 30 mm.

10. - Pneumatique selon la revendication 9, **caractérisé en ce que** la couche de sommet de travail axialement la plus large est radialement à l'intérieur des autres couches de sommet de travail.

11. - Pneumatique selon l'une des revendications précédentes, **caractérisé en ce que** les largeurs axiales des couches de sommet de travail radialement adjacentes à la couche d'éléments de renforcement circonférentiels sont supérieures à la largeur axiale de ladite couche d'éléments de renforcement circonférentiels.

12. - Pneumatique selon la revendication 11, **caractérisé en ce que** les couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par des profilés de mélange de caoutchouc au moins sur le restant de la largeur commune aux dites deux couches de travail.

13. - Pneumatique selon l'une des revendications précédentes, **caractérisé en ce que** les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

14. - Pneumatique selon l'une des revendications 1 à 12, **caractérisé en ce que** les éléments de renforcement d'au moins une couche d'éléments de renforcement circonférentiels sont des éléments de renforcement métalliques coupés de manière à former des tronçons de longueur inférieure à la circonférence de la nappe la moins longue, mais supérieure à 0,1 fois ladite circonférence, les coupures entre tronçons étant axialement décalées les unes par rapport aux autres, le module d'élasticité à la traction par unité de largeur de la couche additionnelle étant de préférence inférieur au module d'élasticité à la traction, mesuré dans les mêmes conditions, de la couche de sommet de travail la plus extensible.

15. - Pneumatique selon l'une des revendications 1 à 12, **caractérisé en ce que** les éléments de renforcement d'au moins une couche d'éléments de renforcement circonférentiels sont des éléments de renforcement métalliques ondulés, le rapport a/λ de l'amplitude d'ondulation a sur la longueur d'onde λ étant au plus égale à 0,09, le module d'élasticité à la traction par unité de largeur de la couche additionnelle étant de préférence inférieur au module d'élasticité à la traction, mesuré dans les mêmes conditions, de la couche de sommet de travailla plus extensible.

## Claims

1. - Tire with a radial carcass reinforcement comprising a crown reinforcement formed of at least two working crown layers of inextensible reinforcing elements, crossed from one layer to the other making angles of between 10° and 45° with the circumferential direction, itself radially capped by a tread, the said tread being connected to two beads via two sidewalls, the crown reinforcement comprising at least one layer of circumferential reinforcing elements **characterized in that** the layer of circumferential reinforcing elements consists of at least a central part and two axially exterior parts, and **in that** the extent to which the circumferential reinforcing elements of the central part are penetrated by the rubber compound with which they are coated is less than the extent to which the circumferential reinforcing elements of the axially exterior parts are penetrated by the rubber compound with which they are coated.

2. - Tire according to Claim 1, **characterized in that** the extent to which the circumferential reinforcing elements of the central part are penetrated by the rubber compound with which they are coated is at least 30% less than the extent to which the circumferential reinforcing elements of the axially exterior parts are penetrated by the rubber compound with which they are coated.

3. - Tire according to Claim 1 or 2, **characterized in that** the extent to which the circumferential reinforcing elements of the axially exterior parts are penetrated by the rubber compound with which they are coated is greater than 90%.

4. - Tire according to one of Claims 1 to 3, **characterized in that** the extent to which the circumferential reinforcing elements of the central part are penetrated by the rubber compound with which they are coated is less than 60%.

5. - Tire according to one of Claims 1 to 4, **characterized in that** the elastic modulus of the rubber compound with which the circumferential reinforcing elements of the central part are coated is less than the modulus of the rubber compound with which the circumferential reinforcing elements of the axially exterior parts are coated.

6. - Tire according to one of the preceding claims, **characterized in that** the axial width of the central part of the layer of circumferential reinforcing elements is greater than 0.15 x S and less than 0.5 x S, S being the maximum axial width of the tire when the latter is mounted on its service rim and inflated to its recommended pressure.

7. - Tire according to one of the preceding claims, **characterized in that** the axial width of each of the axially exterior parts of the layer of circumferential reinforcing elements is less than 0.45 x S.

8. - Tire according to one of the preceding claims, **characterized in that** the layer of circumferential reinforcing elements is positioned radially between two working crown layers.

9. - Tire according to one of the preceding claims, at least two working crown layers having different axial widths, **characterized in that** the difference between the axial width of the axially widest working crown layer and the axial width of the axially least wide working crown layer is comprised between 10 and 30 mm.

10. - Tire according to Claim 9, **characterized in that** the axially widest working crown layer is radially on the interior of the other working crown layers.

11. - Tire according to one of the preceding claims, **characterized in that** the axial widths of the working crown layers radially adjacent to the layer of circumferential reinforcing elements are greater than the axial width of the said layer of circumferential reinforcing elements.

12. - Tire according to Claim 11, **characterized in that** the working crown layers adjacent to the layer of circumferential reinforcing elements are on each side of the equatorial plane and in the immediate axial continuation of the layer of circumferential reinforcing elements coupled over an axial width in order thereafter to be decoupled by profiles of rubber compound at least over the remainder of the width common to the said two working layers.

13. - Tire according to one of the preceding claims, **characterized in that** the reinforcing elements of at least one layer of circumferential reinforcing elements are metal reinforcing elements with a secant modulus at 0.7% elongation comprised between 10 and 120 GPa and a maximum tangent modulus of less than 150 GPa.

14. - Tire according to one of Claims 1 to 12, **characterized in that** the reinforcing elements of at least one layer of circumferential reinforcing elements are metal reinforcing elements that are cut in such a way as to form portions of a length shorter than the circumference of the least long ply, but greater than 0.1 times the said circumference, the cuts between portions being axially offset from one another, the elastic modulus in tension per unit width of the additional layer preferably being less than the elastic modulus in tension, measured under the same conditions, of the most extensible working crown layer.

15. - Tire according to one of Claims 1 to 12, **characterized in that** the reinforcing elements of at least one layer of circumferential reinforcing elements are wavy metal reinforcing elements, the ratio a/λ of the amplitude of the wave a to the wavelength λ being at most equal to 0.09, the elastic modulus in tension per unit width of the additional layer preferably being less than the elastic modulus in tension, measured under the same conditions, of the most extensible working crown layer.

## Patentansprüche

1. Luftreifen mit radialer Karkassenbewehrung, der eine Scheitelbewehrung enthält, die von mindestens zwei Arbeitsscheitelschichten aus nicht dehnbaren Verstärkungselementen geformt wird, die sich von einer Schicht zur anderen kreuzen, indem sie mit der Umfangsrichtung Winkel bilden, die zwischen 10° und 45° liegen, die selbst radial von einem Laufstreifen überdeckt wird, wobei der Laufstreifen über zwei Flanken mit zwei Wülsten verbunden ist, wobei die Scheitelbewehrung mindestens eine Schicht von Umfangsverstärkungselementen aufweist, **dadurch gekennzeichnet, dass** die Schicht von Umfangsverstärkungselementen aus mindestens einem zentralen Teil und zwei axial äußeren Teilen besteht, und dass die Durchdringungsrate der Umfangsverstärkungselemente des zentralen Teils durch die sie umhüllende Kautschukmischung geringer als die Durchdringungsrate der Umfangsverstärkungselementen der axial äußeren Teile durch die sie umhüllende Kautschukmischung ist.

2. Luftreifen nach Anspruch 1, **dadurch gekennzeichnet, dass** die Durchdringungsrate der Umfangsverstärkungselemente des zentralen Teils durch die sie umhüllende Kautschukmischung um mindestens 30 % geringer ist als die Durchdringungsrate der Umfangsverstärkungselementen der axial äußeren Teile durch die sie umhüllende Kautschukmischung.

3. Luftreifen nach Anspruch 1 oder 2, **dadurch gekennzeichnet, dass** die Durchdringungsrate der Umfangsverstärkungselemente der axial äußeren Teile durch die sie umhüllende Kautschukmischung höher als 90 % ist.

4. Luftreifen nach einem der Ansprüche 1 bis 3, **dadurch gekennzeichnet, dass** die Durchdringungsrate der Umfangsverstärkungselemente des zentralen Teils durch die sie umhüllende Kautschukmischung geringer als 60 % ist.

5. Luftreifen nach einem der Ansprüche 1 bis 4, **dadurch gekennzeichnet, dass** der Elastizitätsmodul der die Umfangsverstärkungselemente des zentralen Teils umhüllenden Kautschukmischung geringer als der Modul der die Umfangsverstärkungselemente der axial äußeren Teile umhüllenden Kautschukmischung ist.

6. Luftreifen nach einem der vorhergehenden Ansprüche, **dadurch gekennzeichnet, dass** die axiale Breite des zentralen Teils der Schicht von Umfangsverstärkungselementen größer als 0,15xS und kleiner als 0,5xS ist, wobei S die maximale axiale Breite des Luftreifens ist, wenn dieser auf seine Betriebsfelge montiert und auf seinen empfohlenen Druck aufgepumpt ist.

7. Luftreifen nach einem der vorhergehenden Ansprüche, **dadurch gekennzeichnet, dass** die axiale Breite jedes der axial äußeren Teile der Schicht von Umfangsverstärkungselementen kleiner als 0,45xS ist.

8. Luftreifen nach einem der vorhergehenden Ansprüche, **dadurch gekennzeichnet, dass** die Schicht von Umfangsverstärkungselementen radial zwischen zwei Arbeitsscheitelschichten angeordnet ist.

9. Luftreifen nach einem der vorhergehenden Ansprüche, wobei mindestens zwei Arbeitsscheitelschichten unterschiedliche axiale Breiten haben, **dadurch gekennzeichnet, dass** die Differenz zwischen der axialen Breite der axial breitesten Arbeitsscheitelschicht und der axialen Breite der axial schmalsten Arbeitsscheitelschicht zwischen 10 und 30 mm liegt.

10. Luftreifen nach Anspruch 9, **dadurch gekennzeichnet, dass** die axial breiteste Arbeitsscheitelschicht radial innerhalb der anderen Arbeitsscheitelschichten liegt.

11. Luftreifen nach einem der vorhergehenden Ansprüche, **dadurch gekennzeichnet, dass** die axialen Breiten der radial der Schicht von Umfangsverstärkungselementen benachbarten Arbeitsscheitelschichten größer als die axiale Breite der Schicht von Umfangsverstärkungselementen sind.

12. Luftreifen nach Anspruch 11, **dadurch gekennzeichnet, dass** die der Schicht von Umfangsverstärkungselementen benachbarten Arbeitsscheitelschichten zu beiden Seiten der Äquatorialebene und in der direkten axialen Verlängerung der Schicht von Umfangsverstärkungselementen über eine axiale Breite gekoppelt sind, um dann durch Profilteile aus Kautschukmischung mindestens über den Rest der den zwei Arbeitsschichten gemeinsamen Breite entkoppelt zu sein.

13. Luftreifen nach einem der vorhergehenden Ansprüche, **dadurch gekennzeichnet, dass** die Verstärkungselemente mindestens einer Schicht von Umfangsverstärkungselementen metallische Verstärkungselemente sind, die einen Sekantenmodul bei 0,7 % Dehnung zwischen 10 und 120 GPa und einen maximalen Tangentenmodul geringer als 150 GPa haben.

14. Luftreifen nach einem der Ansprüche 1 bis 12, **dadurch gekennzeichnet, dass** die Verstärkungselemente mindestens einer Schicht von Umfangsverstärkungselementen metallische Verstärkungselemente sind, die so geschnitten sind, dass sie Abschnitte einer geringeren Länge als der Umfang der am wenigsten langen Lage, aber größer als 0,1 Mal der Umfang formen, wobei die Schnitte zwischen Abschnitten axial zueinander versetzt sind, wobei der Zug-Elastizitätsmodul pro Breiteneinheit der zusätzlichen Schicht vorzugsweise geringer als der Zug-Elastizitätsmodul, gemessen unter den gleichen Bedingungen, der dehnbarsten Arbeitsscheitelschicht ist.

15. Luftreifen nach einem der Ansprüche 1 bis 12, **dadurch gekennzeichnet, dass** die Verstärkungselemente mindestens einer Schicht von Umfangsverstärkungselementen metallische gewellte Verstärkungselemente sind, wobei das Verhältnis a/λ der Welligkeitsamplitude a zur Wellenlänge λ höchstens gleich 0,09 ist, wobei der Zug-Elastizitätsmodul pro Breiteneinheit der zusätzlichen Schicht vorzugsweise geringer als der Zug-Elastizitätsmodul, gemessen unter den gleichen Bedingungen, der dehnbarsten Arbeitsscheitelschicht ist.
